(19) Europäisches Patentamt / European Patent Office / Office européen des brevets

(11) **EP 2 557 836 A1**

(12) **EUROPEAN PATENT APPLICATION**
published in accordance with Art. 153(4) EPC

(43) Date of publication:
**13.02.2013 Bulletin 2013/07**

(51) Int Cl.:
**H04W 24/10** (2009.01)

(21) Application number: **11765915.1**

(22) Date of filing: **05.04.2011**

(86) International application number:
**PCT/JP2011/058623**

(87) International publication number:
**WO 2011/126015 (13.10.2011 Gazette 2011/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2010 JP 2010087398**

(71) Applicant: **NTT DOCOMO, INC.**
**Chiyoda-ku**
**Tokyo**
**100-6150 (JP)**

(72) Inventors:
• **ISHII, Hiroyuki**
  **Tokyo 100-6150 (JP)**
• **IWAMURA, Mikio**
  **Tokyo 100-6150 (JP)**

(74) Representative: **HOFFMANN EITLE**
**Patent- und Rechtsanwälte**
**Arabellastrasse 4**
**81925 München (DE)**

(54) **WIRELESS BASE STATION, MOBILE STATION AND COMMUNICATION CONTROL METHOD**

(57)    A radio base station eNB according to the present invention includes a Measurement control signal transmission unit 102 configured to transmit, to a mobile station UE, a "Measurement control signal" instructing the measurement of the radio quality of a communicating cell or an adjacent cell, and a Measurement report reception unit 104 configured to receive, from the mobile station UE, a "Measurement report" notifying a measurement result of the radio quality, and the "Measurement control signal" includes the identification information of one or a plurality of cells which are candidates with which a carrier aggregation is performed.

FIG. 1

**Description**

[Technical Field]

The present invention relates to a radio base station, a mobile station, and a communication control method.

[Background Art]

A communication scheme, which is the next generation of a WCDMA (Wideband Code Division Multiplexing Access) scheme, an HSDPA (High-Speed Downlink Pcket Access) scheme, an HSUPA (High-Speed Uplink Pcket Access) scheme and the like, that is, an LTE (Long Term Evolution) scheme has been discussed in the 3GPP, which is a group aiming to standardize WCDMA, and specification of the LTE scheme is under progress.

Furthermore, as a next-generation communication scheme of the LTE scheme, an LTE-advanced scheme is discussed in the 3GPP. Requirements of the LTE-advanced scheme have been collected in Non Patent Literature 1.

In the LTE-advanced scheme, performing "Carrier aggaregation" has been agreed as a requirement.

When the "Carrier aggregation" is performed, it is possible for a mobile station UE to simultaneously receive downlink signals using a plurality of carriers, or to simultaneously transmit uplink signals using a plurality of carriers.

When the carrier aggregation is performed, each carrier is called "Component Carrier". Furthermore, the "Component Carrier" can also be abbreviated and called "CC".

Meanwhile, in a mobile communication system provided with a plurality of cells, a mobile station UE (User Equipment) is configured to switch a cell and continuously perform communication when moving from one cell to another cell. The cell switching will be referred to as a "handover".

In general, in a mobile communication system, when a mobile station UE moves to an adjacent cell, and the radio quality of a signal from the adjacent cell in the mobile station UE becomes better than the radio quality of a signal from a serving cell, the mobile station UE is configured to be handed over to the adjacent cell.

Note that the received power of the signal, for example, is used as the radio quality of the signal. More specifically, the received power of the signal, for example, is the received power of a downlink reference signal (RSRP: Reference Signal Received Power) transmitted from a serving cell (communicating cell) or an adjacent cell (See Non Patent Literature 2 for the definition of the RSRP.)

Note that as the radio quality of the signal, the received quality of the downlink reference signal (RSRQ: Reference Signal Received Quality), SIR of the downlink reference signal (RS-SIR), CQI (Channel Quality Indicator), CSI (Channel State Information), and the like may be used, instead of the RSRP.

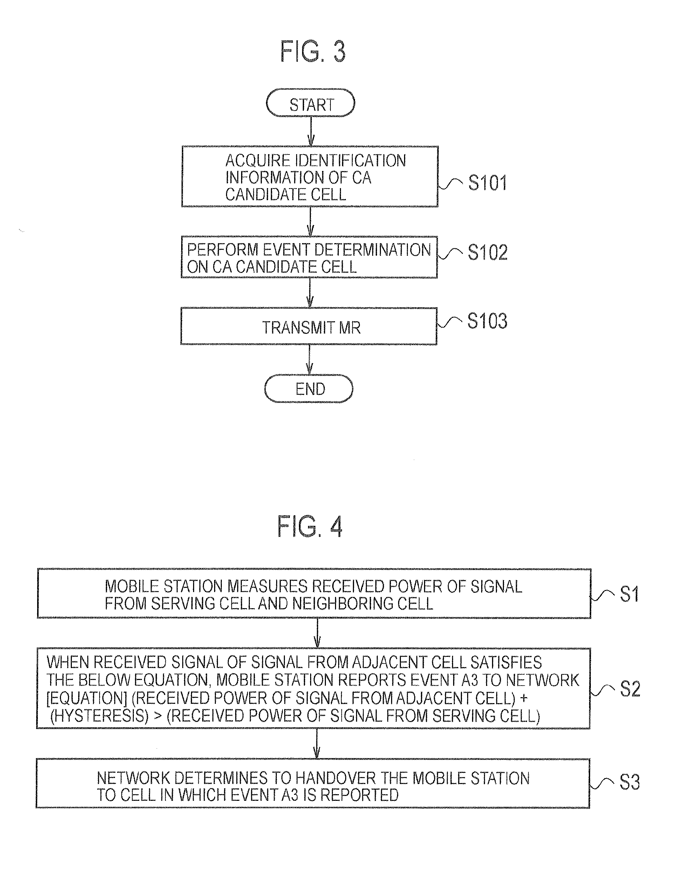

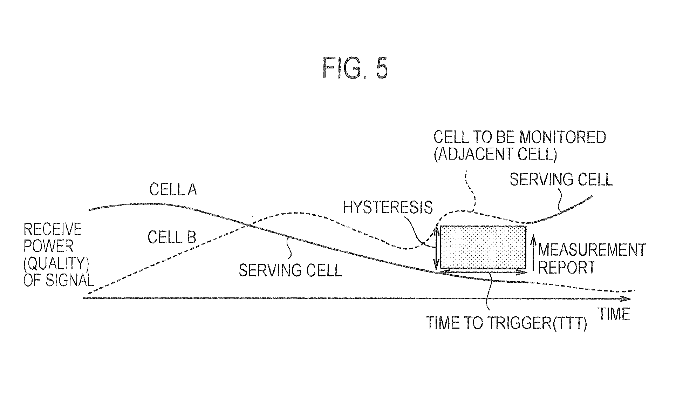

With reference to Fig. 4 and Fig. 5, an example of a handover procedure will be specifically described. In the following description, the received power of a signal (RSRP) is used as the radio quality of a signal.

As illustrated in Fig. 4, in step S1, the mobile station UE measures the received power of signals from a serving cell and an adjacent cell. Furthermore, the mobile station UE may perform cell search together with the measurement, in order to detect an undetected adjacent cell. In the present process, the cell search, and the measurement of the radio quality (the received power) of the serving cell and the adjacent cell may be collectively called "Measurement".

In step S2, the mobile station UE determines whether the received power of the signal from the adjacent cell satisfies Equation 1 below.

$$\text{(Received power of the signal from the adjacent cell)} > \text{(Received power of the signal from the serving cell)} + \text{(Hysteresis)} \dots \text{(Equation 1)}$$

When it is determined that Equation 1 is satisfied, the mobile station UE notifies a network of an event A3 for reporting the measurement result in step S2. Specifically, the network is a radio base station eNB, for example.

Specifically, as illustrated in Fig. 5, the mobile station UE measures the received power of signals from a serving cell (cell A) and an adjacent cell (cell B) to be monitored, and determines whether or not to notify the measurement result using "hysteresis [dB]" and "TTT (Time To Trigger) [ms]" notified in advance.

That is, in Fig. 5, when the received power (radio quality) of the signal from the cell B continuously exceeds the received power (radio quality) of the signal from the cell A by a "hysteresis" or more beyond a predetermined period "TTT", the mobile station UE determines that a "Measurement report" notifying the measurement result must be transmitted.

The "hysteresis" is a value provided for preventing a handover from a serving cell to an adjacent cell from occurring frequently at a cell boundary, and may have a positive value or a negative value. However, the "hysteresis" is generally set as a positive value.

Furthermore, in step S3, if a notification of the event A3 is received, the network decides that the mobile station UE must be handed over to a cell according to the received event A3.

Note that Equation 1 above may be expressed by Equation 2 below. In the case of Equation 2, both the hysteresis and the offset are operated in a hysteresis manner.

$$\text{(Received power of the signal from the adjacent cell)} - \text{(Hysteresis)} > \text{(Received power of the signal from the serving cell)} + \text{(Offset)} \dots \text{(Equation 2)}$$

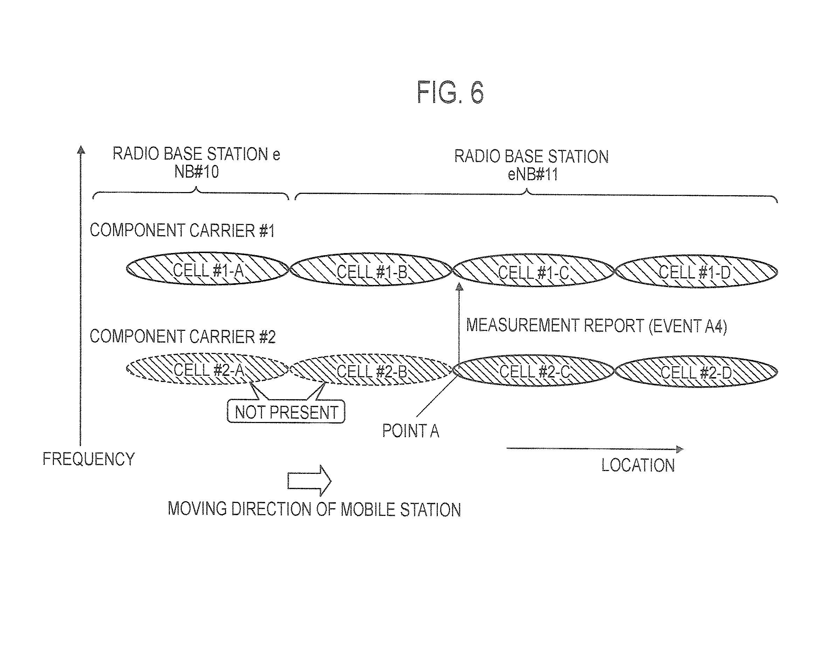

When the mobile station UE performs a new carrier aggregation from a state in which a carrier aggregation was not performed, for example, as illustrated in Fig. 6, by using an event A4, the mobile station UE may notify a radio base station eNB#11 (cell #1-C) that a cell with which carrier aggregation must be performed exists.

That is, when the mobile station UE is located in a cell #1-A and a cell #1-B, a cell #2-A and a cell #2-B do not exist, therefore, carrier aggregation is not performed, however, at a point A illustrated in Fig. 6, the mobile station UE detects that a cell #2-C exists, and then notifies the radio base station eNB#11 of the "Measurement report" notifying the event A4. The event A4 is an event for determining whether or not the radio quality of the signal from the adjacent cell is a predetermined threshold value or more. That is, the mobile station UE determines whether or not the received power of the signal from the adjacent cell satisfies Equation 3 below, and when it is determined that Equation 3 is satisfied, the mobile station UE notifies the radio base station eNB of the measurement result of the event A4 as a "Measurement report".

$$\text{(Received power of the signal from the adjacent cell)} > \text{(Threshold value)} \dots \text{(Equation 3)}$$

[Citation List]

[Non Patent Literature]

[NPL 1] 3GPP TS36.913 (V8.0.1)
[NPL 2] 3GPP TS36.300 V8.5.0 (May, 2008)

[Summary of Invention]

[Technical Problem]

As described above, when the carrier aggregation is started, the mobile station UE measures the radio quality of the signal from the adjacent cell with regard to the component carrier in which the carrier aggregation is not performed, and when the radio quality of the signal from the adjacent cell exceeds a predetermined threshold value, the mobile station UE notifies the radio base station eNB of the measurement result of the event A4, as a "Measurement report".

However, generally, the restriction that "the plurality of component carriers at the time of execution of the carrier aggregation must be subordinate to the same radio base station eNB" exists.

This is because the process of an RLC/PDCP layer is common among the plurality of component carriers even when the carrier aggregation is performed, and a common process of the RLC/PDCP layer cannot be performed between the cells of different radio base stations eNB.

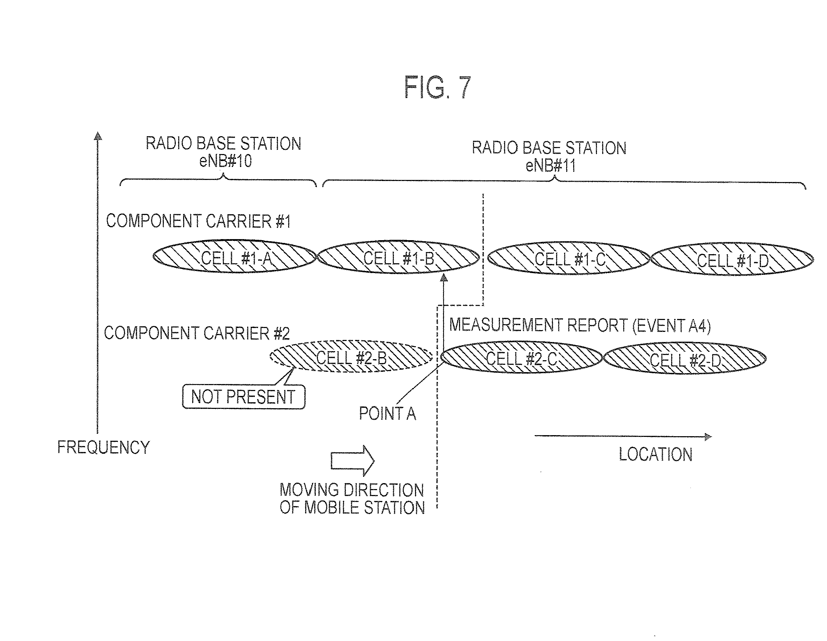

In such a case, as illustrated in Fig. 7, when the cell #1-A and the cell #1-B belong to a radio base station eNB#10, and the cell #1-C, a cell #1-D, the cell #2-C, and a cell #2-D belong to the radio base station eNB#11, then at a point A, even when the mobile station UE notifies the radio base station eNB#10 (cell #1-B) of the measurement result of the event A4 notifying that the radio quality of the signal from the cell #1-C is the predetermined threshold value or more as a "Measurement report", the radio base station eNB#10 (cell #1-B) cannot add the cell #2-C as a cell (component carrier) with which the carrier aggregation is to be performed.

In such a case, if the mobile station UE becomes stationary at that location, the radio quality of the signal from the cell #1-C is always the predetermined threshold value or more, and the "Measurement report" notifying the measurement result of the event A4 is transmitted repeatedly because of which the problem of an increase in overheads occurs.

It should be noted that the aforementioned restriction that "the component carriers with which a carrier aggregation can be performed must be subordinate to the same radio base station eNB" may also be a restriction that "the component carriers with which a carrier aggregation can be performed must be subordinate to one or more predetermined radio base stations eNB".

That is, a carrier aggregation can be performed even with a cell subordinate to a different radio base station, as long as the linkage between the different radio base stations is close. For example, when "CoMP" is performed in two or more different radio base stations, a carrier aggregation may be performed.

Thus, the present invention has been achieved in view of the aforementioned problems, and an object thereof is to provide a radio base station, a mobile station, and a communication control method, by which it is possible to achieve system efficiency and stability of connectivity by reducing unnecessary control signals and efficiently performing a handover at the time of a carrier aggregation.

[Solution to Problem]

A first characteristic of the present invention is summarized as a radio base station, which is configured such that it is possible to communicate with a mobile station by using two or more carriers, and which includes a first control signal transmission unit configured to transmit, to the mobile station, a first control signal instructing the measurement of the radio quality of a communicating cell or an adjacent cell, and a second control signal reception unit configured to receive, from the mobile station, a second control signal notifying a measurement result of the radio quality, and the first control signal includes the identification information of one or a plurality of cells that are the candidates for the communication using the two or more carriers.

A second characteristic of the present invention is summarized as a mobile station, which is configured such that it is possible to communicate with a radio base station by using two or more carriers, and which includes a first control signal reception unit configured to receive, from the radio base station, a first control signal instructing the measurement of the radio quality of a communicating cell or an adjacent cell, and a second control signal transmission unit configured to transmit a second control signal notifying a measurement result of the radio quality, and the first control signal includes the identification information of one or a plurality of cells that are the candidates for the communication using the two or more carriers.

A third characteristic of the present invention is summarized as a communication control method of a mobile station, which is configured such that it is possible to communicate with a radio base station by using two or more carriers, and which includes a first step of receiving, from the radio base station, a first control signal instructing the measurement of the radio quality of a communicating cell or an adjacent cell, and a second step of transmitting a second control signal notifying a measurement result of the radio quality, and the first control signal includes the identification information of one or a plurality of cells that are the candidates for the communication using the two or more carriers.

[Advantageous Effects of Invention]

As described above, according to the present invention, it is possible to provide a radio base station, a mobile station, and a communication control method, by which it is possible to achieve system efficiency and stability of connectivity by reducing unnecessary control signals and efficiently performing a handover at the time of a carrier aggregation.

[Brief Description of Drawings]

[Fig. 1] Fig. 1 is a functional block diagram of a radio base station according to a first embodiment of the present invention.
[Fig. 2] Fig. 2 is a functional block diagram of a mobile station according to the first embodiment of the present invention.
[Fig. 3] Fig. 3 is a flowchart illustrating an operation of the mobile station according to the first embodiment of the present invention.
[Fig. 4] Fig. 4 is a flowchart illustrating an operation of a conventional mobile communication system.
[Fig. 5] Fig. 5 is a diagram for explaining the operation of the conventional mobile communication system.
[Fig. 6] Fig. 6 is a diagram for explaining the operation of the conventional mobile communication system.

[Fig. 7] Fig. 7 is a diagram for explaining the operation of the conventional mobile communication system.

[Description of Embodiments]

(Mobile communication system according to first embodiment of the present invention)

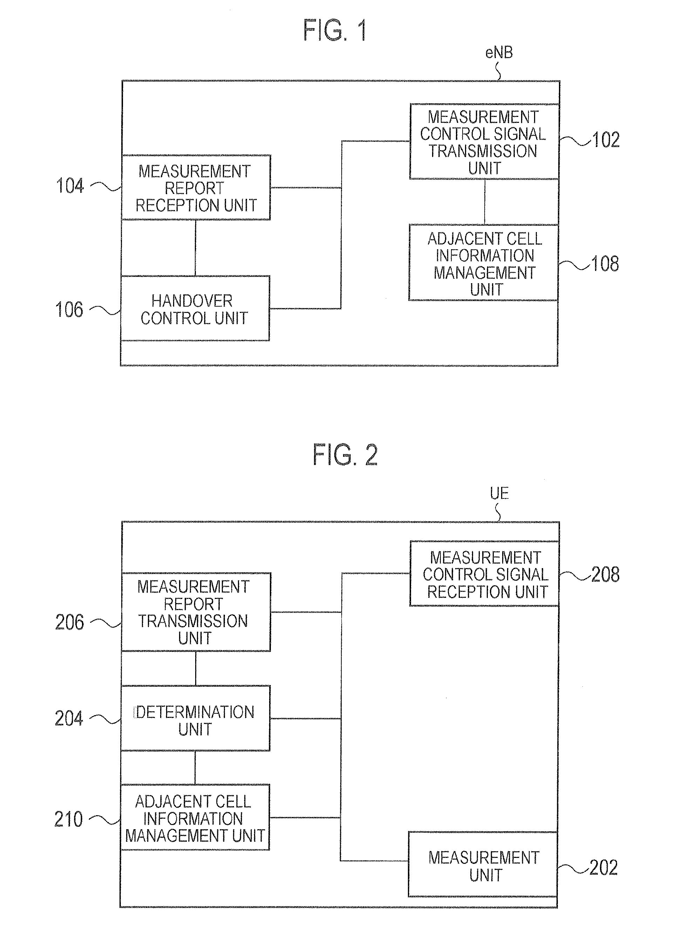

With reference to Fig. 1 to Fig. 3, a mobile communication system according to a first embodiment of the present invention will be described.

The mobile communication system according to the present embodiment, for example, is a system employing an LTE-Advanced scheme. That is, the mobile communication system according to the present embodiment is configured to include a radio base station eNB, and a mobile station UE communicating with the radio base station eNB, wherein the radio base station eNB and the mobile station UE communicate using the LTE-Advanced scheme.

When the LTE-Advanced scheme is applied, a "carrier aggregation" may also be applied. That is, communication using a plurality of component carriers is performed during uplink and downlink communication.

A component carrier corresponds to a single system carrier in the LTE scheme. That is, although communication is performed with a single component carrier in the LTE scheme, communication may be performed with two or more component carriers in the LTE-Advanced scheme.

As illustrated in Fig. 7, in the mobile communication system according to the present embodiment, a component carrier #1 is used in a cell #1-A, a cell #1-B, a cell #1-C, and a cell #1-D, and a component carrier #2 is used in a cell #2-C and a cell #2-D.

Furthermore, as illustrated in Fig. 7, in the mobile communication system according to the present embodiment, the cell #1-A and the cell #1-B belong to a radio base station eNB#10, and the cell #1-C, the cell #1-D, the cell #2-C, and the cell #2-D belong to a radio base station eNB#11.

As illustrated in Fig. 7, the cell #2-C geographically overlaps the cell #1-B and the cell #1-C, and the cell #2-D geographically overlaps the cell #1-C and the cell #1-D.

As illustrated in Fig. 1, the radio base station eNB includes a Measurement control signal transmission unit 102, a Measurement report reception unit 104, a handover control unit 106, and an adjacent cell information management unit 108.

The adjacent cell information management unit 108 is configured to manage the identification information (for example, PCI: Physical Cell ID) of the cells subordinate to the radio base station eNB.

It should be noted that in addition to the identification information (for example, PCI: Physical Cell ID) of the cells subordinate to the radio base station eNB, the adjacent cell information management unit 108 may be configured to manage the information concerning the frequency of the cells subordinate to the radio base station eNB. The frequency of cells may include a downlink frequency or may include an uplink frequency.

Furthermore, the adjacent cell information management unit 108 may be configured to manage the identification information of a cell capable of performing a carrier aggregation with a cell subordinate to the radio base station eNB.

It should be noted that in addition to the identification information (for example, PCI: Physical Cell ID) of a cell capable of performing a carrier aggregation with a cell subordinate to the radio base station eNB, the adjacent cell information management unit 108 may be configured to manage the information concerning the frequency of a cell capable of performing a carrier aggregation with a cell subordinate to the radio base station eNB. The frequency of cells may include a downlink frequency or may include an uplink frequency.

Furthermore, even when a cell is not subordinate to the radio base station eNB, that is, even when a cell is subordinate to an adjacent radio base station eNB, as long as a carrier aggregation can be performed with the cell, the adjacent cell information management unit 108 may be configured to manage the identification information of the cell as the aforementioned "cell capable of performing a carrier aggregation with a cell subordinate to the radio base station eNB".

At the time of transmitting a "Measurement control signal" instructing to perform a "Measurement", to a mobile station UE in a cell subordinate to the radio base station eNB, the Measurement control signal transmission unit 102 is configured to notify the identification information of one or a plurality of cells which are candidates with which a carrier aggregation is performed.

For example, the Measurement control signal transmission unit 102 may be configured to transmit, to the mobile station UE in a cell subordinate to the radio base station eNB, a "Measurement control signal" including the identification information (for example, a list of PCIs) of one or a plurality of cells subordinate to the radio base station eNB, or the identification information (for example, a list of PCIs) of one or a plurality of cells capable of performing a carrier aggregation with a cell subordinate to the radio base station eNB.

It should be noted that in addition to the identification information of the aforementioned cell, the Measurement control signal may include the information concerning the frequency of the cells. The information concerning the frequency may include a downlink frequency or may include an uplink frequency, for example.

Furthermore, it may be specified, in each event, as to whether or not the identification information (for example, a list of PCIs) of one or a plurality of cells subordinate to the radio base station eNB, or the identification information (for example, a list of PCIs) of one or a plurality of cells capable of performing a carrier aggregation with a cell subordinate to the radio base station eNB, is transmitted.

For example, the process that a list of PCIs is notified may be performed for an event A4, and the process that a list of PCIs is not notified may be performed for an event A3. In such a case, an instruction signal indicating whether or not a list of PCIs is used may be notified from the radio base station eNB to the mobile station UE, in each event.

Furthermore, the Measurement control signal transmission unit 102 may be configured to transmit the "Measurement control signal" by the broadcast information or an RRC message.

The Measurement report reception unit 104 is configured to receive the "Measurement report" notifying the measurement result of the radio quality from the mobile station UE in a cell subordinate to the radio base station eNB.

The handover control unit 106 is configured to determine whether or not a handover must be performed for the mobile station UE based on the measurement result of the radio quality included in the "Measurement report" received by the Measurement report reception unit 104.

As illustrated in Fig. 2, the mobile station UE includes a measurement unit 202, a determination unit 204, a Measurement report transmission unit 206, a Measurement control signal reception unit 208, and an adjacent cell information management unit 210.

The Measurement control signal reception unit 208 is configured to receive the "Measurement control signal" instructing the measurement of the radio quality of the communicating cell or the adjacent cell, from the radio base station eNB.

The adjacent cell information management unit 210 is configured to manage the identification information (for example, a list of PCIs) of one or a plurality of cells which are candidates with which a carrier aggregation is performed included in the "Measurement control signal" received by the Measurement control signal reception unit 208.

It should be noted that in addition to the identification information of the aforementioned cell, the Measurement control signal may include the information concerning the frequency of the cells. The information concerning the frequency may include a downlink frequency or may include an uplink frequency, for example.

Further, in place of the identification information (for example, a list of PCIs) of one or a plurality of cells which are candidates with which a carrier aggregation is performed, the Measurement control signal may include the identification information (for example, a list of PCIs) of one or a plurality of cells subordinate to the radio base station eNB.

The measurement unit 202 is configured to measure the radio quality with regard to the communicating cell or the adjacent cell. More specifically, the aforementioned "to measure the radio quality with regard to the communicating cell or the adjacent cell" is a measurement process configured to perform a cell search, and then measure the radio quality of the cell detected by the cell search, for example.

The determination unit 204 is configured to perform a determination process according to the events A1 through A5, depending on the radio quality of the communicating cell or the adjacent cell measured by the measurement unit 202, with regard to the communicating cell or the adjacent cell specified by the "Measurement control signal".

The communicating cell or the adjacent cell specified by the "Measurement control signal", for example, may be a cell included in the identification information (for example, PCI: Physical Cell ID) of a cell subordinate to the radio base station eNB, or a cell included in the identification information of a cell capable of performing a carrier aggregation with a cell subordinate to the radio base station eNB.

Specifically, the determination unit 204 is configured to perform the determination process according to the event A4 only with regard to one or a plurality of cells which are candidates with which a carrier aggregation is performed.

Alternatively, the determination unit 204 may be configured to perform the determination process according to the events A3 and A5 only with regard to one or a plurality of cells which are candidates with which a carrier aggregation is performed.

It should be noted that in the event A4, the determination unit 204 may be configured to perform the determination process according to the event A4 only with regard to one or a plurality of cells which are candidates with which a carrier aggregation is performed, and in the events A3 and A5, the determination unit 204 may be configured to perform the determination process according to the events A3 and A5 with regard to all cells.

That is, the determination unit 204 may be configured to enable the selection of whether to perform the determination process only with regard to one or a plurality of cells which are candidates with which a carrier aggregation is performed, or to perform the determination process with regard to all cells, in each event.

The all cells may be all the cells that could be detected through the process of cell search or measurement by the measurement unit 202.

Specifically, the determination unit 204 determines whether or not the received power (RSRP) of the signal from the adjacent cell satisfies Equation 4 below, and if it is determined that Equation 4 is satisfied, the determination unit 204 may be configured to detect the event A3.

$$\text{(Received power of the signal from the adjacent cell)} -$$

$$\text{(Hysteresis)} > \text{(Received power of the signal from the serving cell)} \dots$$

$$\text{(Equation 4)}$$

The determination unit 204 may determine whether or not Equation 4 is satisfied with regard to the adjacent cell included in one or the plurality of cells which are candidates with which a carrier aggregation is performed.

Furthermore, the determination unit 204 determines whether or not the received power of the signal from the serving cell and the received power of the signal from the adjacent cell satisfy Equation 5 below, and if it is determined that Equation 5 is satisfied, the determination unit 204 may be configured to detect the event A5.

(Received power of the signal from the serving cell) < (Fourth threshold value), and

$$\text{(Received power of the signal from the adjacent cell)} > \text{(Fifth}$$

$$\text{threshold value)} \dots \text{(Equation 5)}$$

The determination unit 204 may determine whether or not Equation 5 is satisfied with regard to the adjacent cell included in one or the plurality of cells which are candidates with which a carrier aggregation is performed. The Measurement report transmission unit 206 is configured to transmit the "Measurement report" notifying the measurement result of the radio quality, to the radio base station eNB, when the events A1 through A5 are detected by the determination unit 204.

In the aforementioned example, a case in which the measurement unit 202 measures the radio quality of all cells detected by the cell search, and the determination unit 204 performs the determination process according to each event, with regard to the communicating cell or the adjacent cell specified by the "Measurement control signal" is shown, however, alternatively, the measurement unit 202 may measure the radio quality of the communicating cell or the adjacent cell specified by the "Measurement control signal", and the determination unit 204 may perform the determination process according to each event, with regard to the communicating cell or the adjacent cell measured by the measurement unit 202.

With reference to Fig. 3, the operation of the mobile station UE according to the present embodiment will be described, below.

As illustrated in Fig. 3, in step S101, the mobile station UE in a cell subordinate to the radio base station eNB acquires, from the radio base station eNB, the identification information of the cells subordinate to the radio base station eNB, as the identification information of one or the plurality of cells (CA candidate cells) which are candidates with which a carrier aggregation is performed.

In step S102, the mobile station UE performs the determination process according to each of events A1 through A5, only with regard to the cell identified by the identification information of one or the plurality of cells which are candidates with which a carrier aggregation is performed, from among the communicating cells or the adjacent cells detected by the cell search.

In step S103, upon detecting the events A1 through A5, the mobile station UE transmits a "Measurement report" notifying the measurement result of the radio quality, to the radio base station eNB.

According to the mobile communication system of the present embodiment, by eliminating the transmission of the "Measurement report" with regard to the cells with which the carrier aggregation cannot be performed, the overheads of signaling can be reduced.

For example, according to the mobile communication system of the present embodiment, in the example illustrated in Fig. 7, when the mobile station UE of the cell #1-B exists at the point A, the radio base station eNB#10 does not notify, to the mobile station UE, the identification information of the cell #2-C, as one or the plurality of cells which are candidates with which a carrier aggregation is performed, and therefore, the mobile station UE does not perform the determination process of the event A4 (or, the events A3 and A5), with regard to the cell #2-C, because of which the transmission of an unnecessary "Measurement report" can be avoided.

The characteristics of the present embodiment as described above may be expressed as follows.

A first characteristic of the present embodiment is summarized as a radio base station eNB, which is configured such that it is possible to perform a carrier aggregation (perform communication by using two or more carriers) with a mobile station UE, and which includes a Measurement control signal transmission unit (first control signal transmission unit) 102 configured to transmit, to the mobile station UE, a "Measurement control signal (first control signal)" instructing the measurement of the radio quality of a communicating cell (serving cell) or an adjacent cell, and a Measurement report reception unit (second control signal reception unit) 104 configured to receive, from the mobile station UE, a "Measurement report (second control signal)" notifying a measurement result of the radio quality, and the "Measurement control signal" includes the identification information (PCI) of one or a plurality of cells which are candidates with which a carrier aggregation is performed.

In the first characteristic of the present embodiment, the identification information of one or the plurality of cells which are candidates with which a carrier aggregation is performed may be the identification information of one or the plurality of cells capable of performing a carrier aggregation with a cell subordinate to the radio base station eNB.

A second characteristic of the present embodiment is summarized as a mobile station UE, which is configured such that it is possible to perform a carrier aggregation with a radio base station eNB, and which includes a Measurement control signal reception unit (first control signal reception unit) 208 configured to receive, from the radio base station eNB, a "Measurement control signal" instructing the measurement of the radio quality of a communicating cell or an adjacent cell, and a Measurement report transmission unit (second control signal transmission unit) 206 configured to transmit a "Measurement report" notifying a measurement result of the radio quality, and the "Measurement control signal" includes the identification information of one or a plurality of cells which are candidates with which a carrier aggregation is performed.

In the second characteristic of the present embodiment, the identification information of one or the plurality of cells which are candidates with which a carrier aggregation is performed may be the identification information of one or the plurality of cells capable of performing a carrier aggregation with a cell subordinate to the radio base station eNB.

A third characteristic of the present embodiment is summarized as a communication control method of a mobile station UE, which is configured such that it is possible to perform a carrier aggregation with a radio base station eNB, and which includes a first step of receiving, from the radio base station eNB, a "Measurement control signal" instructing the measurement of the radio quality of a communicating cell or an adjacent cell, and a second step of transmitting a "Measurement report" notifying a measurement result of the radio quality, and the "Measurement control signal" includes the identification information of one or a plurality of cells which are candidates with which a carrier aggregation is performed.

Note that the operation of the mobile station UE or the radio base station eNB may be performed by hardware, a software module performed by a processor, or a combination thereof.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile station UE or the radio base station eNB. Furthermore, such a storage medium and processor may be arranged in the mobile station UE or the radio base station eNB as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

[Reference Signs List]

| | |
|---|---|
| eNB | Radio base station |
| 102 | Measurement control signal transmission unit |
| 104 | Measurement report reception unit |
| 106 | Handover control unit |
| 108 | Adjacent cell information management unit |
| UE | Mobile station |
| 202 | Measurement unit |
| 204 | Determination unit |
| 206 | Measurement report transmission unit |
| 208 | Measurement control signal reception unit |
| 210 | Adjacent cell information management unit |

**Claims**

1. A radio base station configured such that it is possible to communicate with a mobile station by using two or more carriers, comprising:

   a first control signal transmission unit configured to transmit, to the mobile station, a first control signal instructing the measurement of the radio quality of a communicating cell or an adjacent cell; and
   a second control signal reception unit configured to receive, from the mobile station, a second control signal notifying a measurement result of the radio quality, wherein
   the first control signal includes the identification information of one or a plurality of cells that are the candidates for the communication using the two or more carriers.

2. The radio base station according to claim 1, wherein the identification information of one or the plurality of cells that are the candidates for the communication using the two or more carriers is the identification information of one or the plurality of cells capable of performing communication, by using the two or more carriers, with a cell subordinate to the radio base station.

3. A mobile station configured such that it is possible to communicate with a radio base station by using two or more carriers, comprising:

   a first control signal reception unit configured to receive, from the radio base station, a first control signal instructing the measurement of the radio quality of a communicating cell or an adjacent cell; and
   a second control signal transmission unit configured to transmit a second control signal notifying a measurement result of the radio quality, wherein
   the first control signal includes the identification information of one or a plurality of cells that are the candidates for the communication using the two or more carriers.

4. The mobile station according to claim 3, wherein the identification information of one or the plurality of cells that are the candidates for the communication using the two or more carriers is the identification information of one or the plurality of cells capable of performing communication, by using the two or more carriers, with a cell subordinate to the radio base station.

5. A communication control method of a mobile station configured such that it is possible to communicate with a radio base station by using two or more carriers, comprising:

   a first step of receiving, from the radio base station, a first control signal instructing the measurement of the radio quality of a communicating cell or an adjacent cell; and
   a second step of transmitting a second control signal notifying a measurement result of the radio quality, wherein
   the first control signal includes the identification information of one or a plurality of cells that are the candidates for the communication using the two or more carriers.

## FIG. 1

eNB

104 — MEASUREMENT REPORT RECEPTION UNIT

106 — HANDOVER CONTROL UNIT

MEASUREMENT CONTROL SIGNAL TRANSMISSION UNIT — 102

ADJACENT CELL INFORMATION MANAGEMENT UNIT — 108

## FIG. 2

UE

206 — MEASUREMENT REPORT TRANSMISSION UNIT

204 — DETERMINATION UNIT

210 — ADJACENT CELL INFORMATION MANAGEMENT UNIT

MEASUREMENT CONTROL SIGNAL RECEPTION UNIT — 208

MEASUREMENT UNIT — 202

## FIG. 3

```
        ( START )
            │
            ▼
┌───────────────────────┐
│ ACQUIRE IDENTIFICATION│
│ INFORMATION OF CA     │──∽ S101
│ CANDIDATE CELL        │
└───────────────────────┘
            │
            ▼
┌───────────────────────┐
│ PERFORM EVENT DETERMINATION │──∽ S102
│ ON CA CANDIDATE CELL  │
└───────────────────────┘
            │
            ▼
┌───────────────────────┐
│      TRANSMIT MR      │──∽ S103
└───────────────────────┘
            │
            ▼
         ( END )
```

## FIG. 4

```
┌──────────────────────────────────────────────────────────────┐
│  MOBILE STATION MEASURES RECEIVED POWER OF SIGNAL             │──∽ S1
│  FROM SERVING CELL AND NEIGHBORING CELL                       │
└──────────────────────────────────────────────────────────────┘
                            │
                            ▼
┌──────────────────────────────────────────────────────────────┐
│  WHEN RECEIVED SIGNAL OF SIGNAL FROM ADJACENT CELL SATISFIES  │
│  THE BELOW EQUATION, MOBILE STATION REPORTS EVENT A3 TO NETWORK│──∽ S2
│  [EQUATION] (RECEIVED POWER OF SIGNAL FROM ADJACENT CELL) +   │
│  (HYSTERESIS) > (RECEIVED POWER OF SIGNAL FROM SERVING CELL)  │
└──────────────────────────────────────────────────────────────┘
                            │
                            ▼
┌──────────────────────────────────────────────────────────────┐
│  NETWORK DETERMINES TO HANDOVER THE MOBILE STATION           │──∽ S3
│  TO CELL IN WHICH EVENT A3 IS REPORTED                        │
└──────────────────────────────────────────────────────────────┘
```

FIG. 5

CELL TO BE MONITORED
(ADJACENT CELL)

SERVING CELL

CELL A

HYSTERESIS

RECEIVE
POWER
(QUALITY)
OF SIGNAL

CELL B

SERVING CELL

MEASUREMENT
REPORT

TIME TO TRIGGER(TTT)

TIME

# FIG. 6

RADIO BASE STATION e
NB#10

RADIO BASE STATION
eNB#11

COMPONENT CARRIER #1

CELL #1-A  CELL #1-B  CELL #1-C  CELL #1-D

COMPONENT CARRIER #2

CELL #2-A  CELL #2-B  CELL #2-C  CELL #2-D

MEASUREMENT REPORT (EVENT A4)

NOT PRESENT

POINT A

FREQUENCY

LOCATION

MOVING DIRECTION OF MOBILE STATION

EP 2 557 836 A1

FIG. 7

## INTERNATIONAL SEARCH REPORT

| International application No. |
| --- |
| PCT/JP2011/058623 |

**A. CLASSIFICATION OF SUBJECT MATTER**
*H04W24/10*(2009.01)i

According to International Patent Classification (IPC) or to both national classification and IPC

**B. FIELDS SEARCHED**

Minimum documentation searched (classification system followed by classification symbols)
H04W4/00-H04W99/00, H04B7/24-H04B7/26

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2010/032811 A1 (NTT Docomo Inc.), 25 March 2010 (25.03.2010), & JP 2010-74754 A | 1-5 |
| A | Motorola, Carrier Aggregation-Activation and Measurements, 3GPP R2-100452, 3GPP, 2010.01.18 | 1-5 |
| A | LG Electonics Inc., Measurements configuration structure for carrier aggregation, 3GPP R2-097017, 3GPP, 2009.11.09 | 1-5 |

☐ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 May, 2011 (06.05.11) | 17 May, 2011 (17.05.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS36.913*
- *3GPP TS36.300 V8.5.0,* May 2008